# EUROPEAN PATENT APPLICATION

(11) **EP 2 127 963 A1**
(43) Date of publication of application: **02.12.2009**
(21) Application number: 09161592.2
(22) Date of filing: 29.05.2009
(51) Int. Cl.: B60R 22/32

(54) **Release device for safety belt**

(30) Priority: 30.05.2008 IT RM20080286
(71) Applicant: Greco, Alessio, 00118 Roma (IT); Cinti Piredda, Maurizio, 00179 Roma (IT)
(72) Inventor: Greco, Alessio, 00118 Roma (IT); Cinti Piredda, Maurizio, 00179 Roma (IT)
(74) Representative: Cinquantini, Bruno

(57) **Abstract**

A release device for safety belt, specifically for simplifying the operation (by the passenger or a rescuer) of releasing the safety belt worn by the passenger of a vehicle, comprising a safety belt 10, a male plate 9 secured to the safety belt 10 in a sliding manner, a female 7 comprising a release button 6 adapted to retain said male plate 9 and release it when the release button 6 is operated and reversing means 4 and 5 adapted to allow the release button 6 to be operated by pulling.

## Description

### Field of the invention

The present invention relates to a release device for safety belt for motor vehicles.

### State of the art

The safety belt is an effective passive device adapted to reduce the damages caused to the occupiers of a passenger compartment deriving from a violent collision against an obstacle or generally an accident.

Using the safety belt is particularly essential when an airbag is coupled therewith, because the safety belt retains the occupier's body arranging it for a correct impact against the airbag balloon.

The impact angle would be otherwise incorrect and the airbag would not serve its function, being instead potentially dangerous for the occupier, if he/she is particularly close during the step of bursting.

The safety belt comprises a female secured to the floor of the passenger compartment, or to the seat casing, a belt and a ring, sliding on the belt, integral with a plate adapted to act as a male with respect to said female and adapted to be secured by the female when the belt is worn.

A problem connected to the use of safety belts, however, is that they complicate the procedures of extracting the occupiers from the passenger compartment upon an impact against an obstacle.

In particular, a rescuer must enter in the passenger compartment to operate the system for releasing the belts, or he/she must cut them, but for this latter purpose the rescuer should be equipped with specific tools capable of cutting the particular fabric the belts are made of. Unfortunately, however, only the police and the rescue personnel are equipped with these specific tools.

On the other hand, the operation of entering in the passenger compartment is very difficult and risky for the occupiers, when there are at least two of them side by side on a same row of seats, whose head and chest could be injured. Moreover, the problem is even more serious when pressing a release button which is placed in a particularly low position is required.

In all the underlined circumstances, the impossibility of quickly releasing the safety belt would imply using time which may be otherwise precious for aid and rescue operations.

It has been noticed that, when a passenger compartment is subjected to a strong side impact, the two front seats may draw so closer that the release button of the safety belts is no longer allowed to be reached. It appears that some people have been killed for this reason.

Furthermore, the present release system is not easily operable by the passenger in case his/her arm is injured at the point of fastening the safety belt.

Therefore, the technical problem is allowing the safety belt to be released without reaching and pressing the release button.

### Summary of the invention

It is the object of the present invention to provide a release device for safety belt adapted to solve the above-mentioned problem.

The object of the present invention is a release device for safety belt, specifically for simplifying the operation, by a rescuer, of releasing the safety belt of a person occupying a vehicle involved in an accident, which in accordance with claim 1, comprises a safety belt, a male plate secured to the safety belt in a sliding manner, a female comprising a release button adapted to retain said male plate and release it when the release button is operated, the release device being **characterized in that** it comprises reversing means adapted to allow the release button to be operated by pulling.

Said device is applied when, in case of accident, a rescuer intervenes to set the occupier of a passenger compartment free from the respective safety belt, thus avoiding from slipping in the passenger compartment, accomplishing dangerous operations for himself and the occupier and without being compelled to use tools for cutting the belt.

The dependent claims describe preferred embodiments of the invention, thus forming an integral part of the present description.

### Brief description of the drawings

Further features and advantages of the invention will be more apparent in view of the detailed description of a preferred, but not exclusive, embodiment of a release device for safety belt, shown by way of non-limiting example, with the aid of the accompanying drawings, in which:

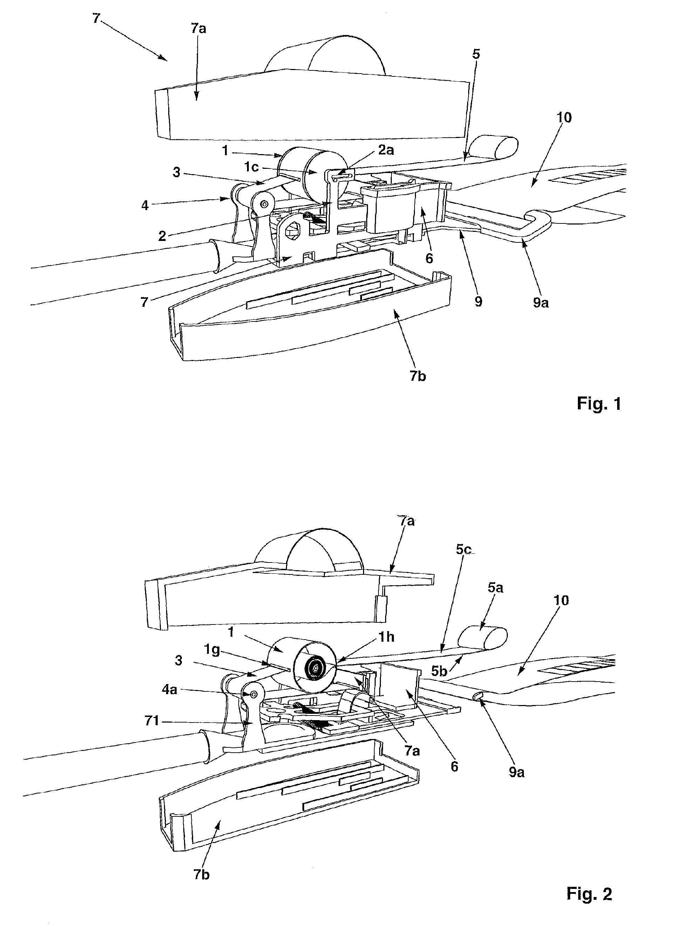

Figure 1 depicts an exploded axonometric view of the device of the invention with on-vehicle assembling elements;
Figure 2 depicts an exploded axonometric view of the device of the invention;

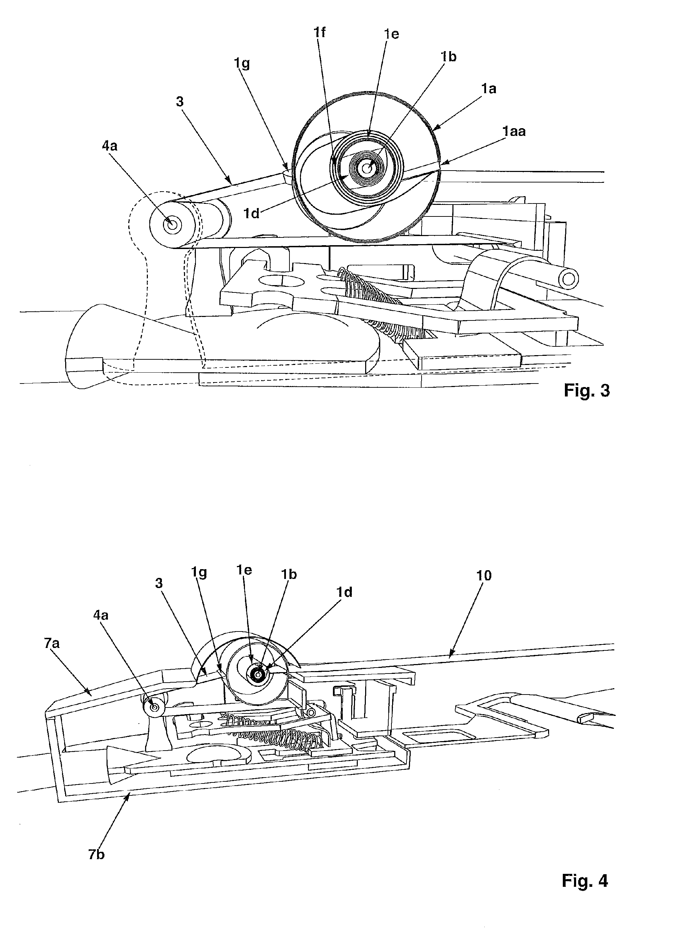

Figure 3 depicts an enlarged view of a part of the device of the invention;

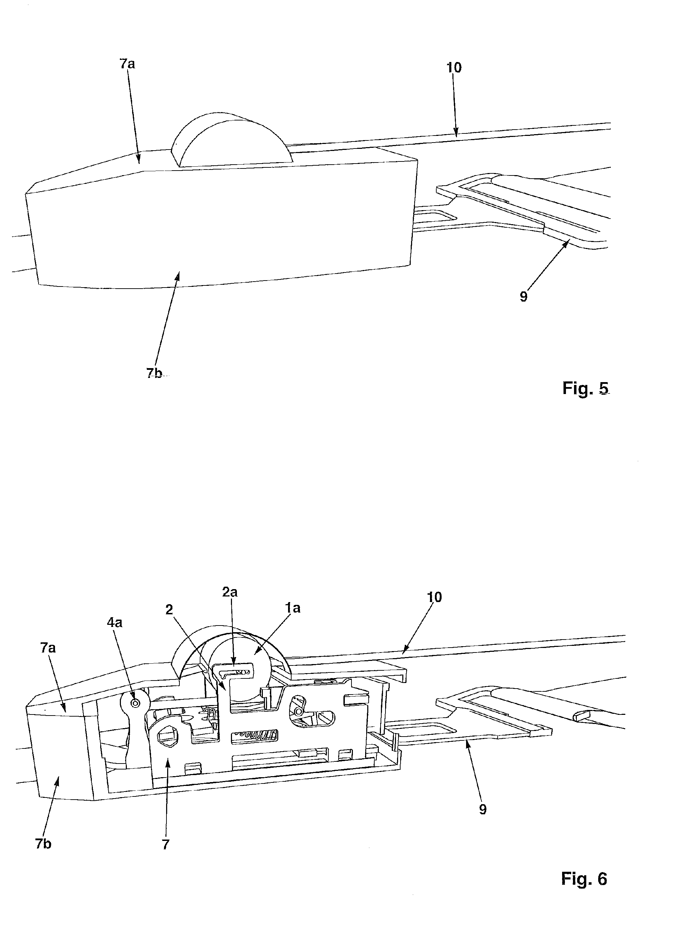

Figures 4, 5 and 6 depict further axonometric views of the device of the invention.

The same reference numbers and letters in the figures refer to the same elements or components.

### Detailed description of a preferred embodiment of the invention

The present invention firstly refers to the female 7, which being secured to the floor or seat of a passenger compartment, facilitates rescue operations, and more precisely the operation of releasing the safety belt 10.

Said female comprises reversing means 5 adapted to allow the release button 6 to be remotely operated by pulling, opening the retaining means, known per se, which retain the male plate 9 comprising a ring 9a, connected to the safety belt 10 in a sliding manner.

An action of pulling may also be advantageously imparted through a non-rigid and thus non-dangerous object such as a strap and similar.

In the preferred embodiment in accordance with the figures, said reversing means 4 and 5 comprise a strap 5, connected to the release button 6 through a reversing roller 4, so that the pulling imparted on the strap turns into the pressure needed to operate the release button, thereby disengaging the male plate 9 from the female 7.

In said preferred, but non-limiting, embodiment it is preferred that said strap is not subjected to further reversing operations in the passenger compartment, whereby in order to make it easy to be targeted by a rescuer, it comprises a Velcro application 5b made of polyester fiber or the like, which allows it to be fixed as a tear strip adhering along the seat belt. Thereby, the strap does not collapse on the floor of the passenger compartment, thus remaining secured to the safety belt at a height from the floor such that it may be easily grasped by a rescuer.

In order to make the strap more visible, this may comprise at least one part 5c made of a refractive material, or may be intrinsically made of a similar material.

According to the same preferred embodiment, said reversing means 5 comprise a winder 1 and a strap portion 3 adapted to connect said winder 1 to the release button 6.

The winder is adapted to wind the strap back when it is not secured to the safety belt, thus facilitating finding the strap end in the next use. Said arrangement avoids the strap from collapsing on the floor of the passenger compartment, as previously mentioned.

Still in the preferred embodiment, said winder comprises:
- an external body 1a preferably made of ABS and constructed by thermo-injection, comprising a slit 1 aa for passing the strap 5 through, at least an aperture for assembling the internal parts and a thermo welded fastening 1 g to secure the body 1 a to one end of the strap portion 3 which carries out the reverting operation of the strap 5,
- a tensioned steel sliding axle 1 b,
- a cap 1 c for closing the body 1 a,
- a rotatable cylinder 1 e, preferably made of ABS, around which the strap 5 winds and comprising lubricating grease and a thermo welded fastening 1f f adapted to secure the rotatable cylinder to the strap 5,
- a spiral spring 1d for winding the strap back, preferably made of harmonic steel and secured to the rotatable cylinder 1 e at one end and to the body 1 a or cap 1 c at the other end,
- a rubber dust cover 1 h to avoid dust infiltration along said slit 1 aa for passing the strap 5 through.

The other end of the strap portion 3 is secured to the release button 6, by means of a heat-seal 6a.

In order to avoid said winder from vibrating during the moving of the vehicle comprising the passenger compartment, it is supported by supporting means 2 integral with the casing 71 of the female 7 and inside the shell containing it, which in the preferred embodiment comprises two bodies 7a and 7b. Said supporting means specifically comprise a slot 2a, adapted to allow winding 1 to slide when operating the strap, during a rescue operation, in the exit direction of the strap from a proper aperture in the shell of female 7.

In the same preferred embodiment, said reversing roll 4 is made of Teflon and comprises a riveted steel pin 4a adapted to secure the roll to the casing 71 of the female 7.

Finally, in order to make the grasp of strap 5 more comfortable and steadier, the free end thereof is folded and seamed to form a ring 5a.

The ring may also comprise a refractive surface or reflector, that among the other things, facilitates the police in determining whether the passengers occupying a vehicle wear the safety belt or not.

The advantages deriving from the application of the present invention are clear, in particular a rescuer easily set the occupier of a passenger compartment, subjected to an impact free, from the respective safety belt, without accomplishing dangerous operations for the occupier and without being compelled to have tools for cutting the belt.

Such a device advantageously represents an innovation adapted to provide the driver with a higher reaction percentage when releasing the belt after an accident, as compared to the fact of having to target a small and uncomfortable button placed in a low position. Moreover, when the strap is long enough, the safety belt release may be performed with any arm.

Finally, the invention also tends to make the normal unfastening-release of the safety belt more comfortable during the normal use thereof.

The particular embodiments described herein do not limit the content of this application which covers all the variations of the invention defined by the claims.

## Claims

1. A release device for safety belt comprising a safety belt (10), a male plate (9) secured to the safety belt (10) in a sliding manner, a female (7) comprising a release button (6) adapted to retain said male plate (9) and release it when the release button (6) is operated, the release device being **characterized in that** it comprises reversing means (4, 5) adapted to allow the release button (6) to be operated by pulling.

2. A device according to claim 1, wherein said reversing means comprise a strap (5) secured to the release button (6) at one end and a reversing roll (4) adapted to transform the pulling imparted on the strap into the pressure for operating the release button (6).

3. A device according to claim 2, wherein said strap (5) comprises a Velcro application (5b) made of polyester fiber or the like, to be fixed as a tear strip adhering along the seat belt (10).

4. A device according to claim 2, wherein said strap (5) may comprise at least a part (5c) made of refractive material.

5. A device according to claim 3, further comprising a winder (1) adapted to wind the strap back when it is not fixed as a tear strip adhering along the seat belt (10), thus facilitating finding the free end (5a) of the strap in the next use.

6. A device according to claim 5, wherein said reversing means (5) comprise a strap portion (3) adapted to connect said winder (5) to the release button (6), the strap (5) being secured to the winder (1).

7. A device according to claim 5 or 6, comprising:
- an external body (1a), preferably made of ABS and constructed by thermo-injection, comprising a slit (1aa) for passing the strap (5) through, at least an aperture for assembling the internal parts and a thermo welded fastening (1g) to secure the body (1a) to one end of the strap portion (3) which carries out the reverting operation of the strap (5),
- a tensioned steel sliding axle (1b),
- a cap (1c) for closing the body (1a),
- a rotatable cylinder (1e), preferably made of ABS, around which the strap (5) winds and comprising lubricating grease and a thermo welded fastening (1f) adapted to secure the rotatable cylinder to the strap (5),
- a spiral spring (1d) for winding the strap back, preferably made of harmonic steel and secured to the rotatable cylinder (1e) at one end and to the body (1a) or cap (1c) at the other end,
- a rubber dust cover (1h) to avoid dust infiltration along said slit (1aa) for passing the strap (5) through.

8. A device according to claim 5, wherein said winder is secured to the female (7) through supporting means (2) comprising a slot (2a) adapted to allow winding (1) to slide, which promotes operating the release button (6) by pulling.

9. A device according to claim 2, wherein said reversing roll (4) is made of Teflon and comprises a riveted steel pin (4a) adapted to secure the roll to the female (7).

10. A device according to claim 2, wherein the free end (5a) of the strap (5) is folded to form a ring, so as to facilitate the grasp of the strap.
